# EUROPÄISCHE PATENTANMELDUNG

(11) **EP 1 652 451 A1**
(43) Veröffentlichungstag der Anmeldung: **03.05.2006**
(21) Anmeldenummer: 05001108.9
(22) Anmeldetag: 20.01.2005
(51) Int. Cl.: A47B 47/00

(54) **Verbindungsvorrichtung zum Verbinden eines Tischbeins mit wenigstens einer Zarge**

(30) Priorität: 26.10.2004 DE 102004052043
(71) Anmelder: VS Vereinigte Spezialmöbelfabriken GmbH & Co., D-97941 Tauberbischofsheim (DE)
(72) Erfinder: Korte, Friedrich, 32429 Minden (DE); Weber, Reinhard, 32425 Minden (DE); Beil, Frank, 97947 Grünsfeld (DE)
(74) Vertreter: Söltenfuss, Dirk Christian

(57) **Zusammenfassung**

Es wird eine Verbindungsvorrichtung (20) zum Verbinden eines Tischbeins (16) mit wenigstens einer Zarge (14), wobei sowohl das Tischbein als auch die Zarge zumindest in dem an die Verbindungsvorrichtung (20) angrenzenden Bereich als Hohlprofil ausgebildet sind, vorgeschlagen, die einen Profilkörper (22); einen ersten Fortsatz (24), der mit dem Profilkörper (22) verbunden ist, der koaxial zu einer Zarge (14) ausgebildet ist, und dessen Außendurchmesser im Wesentlichen dem Innendurchmesser des Hohlprofils der Zarge (14) entspricht; und einen zweiten Fortsatz (28), der mit dem Profilkörper (22) verbunden ist, der koaxial zu einem Tischbein (16) ausgebildet ist, und dessen Außendurchmesser im Wesentlichen dem Innendurchmesser des Hohlprofils des Tischbeins entspricht, aufweist. Mit einer solchen Verbindungseinrichtung (20) lässt sich trotz Leichtbauweise ein sehr formstabiles Tischmöbel (10) realisieren.

## Beschreibung

Die vorliegende Erfindung betrifft eine Verbindungsvorrichtung zum Verbinden eines Tischbeins mit wenigstens einer Zarge des Tisches, mit der ein leichtes und zugleich formstabiles Tischmöbel realisiert werden kann.

Üblicherweise sind bei einem Tischmöbel mit einer Tischplatte, vier im rechten Winkel zueinander angeordneten Zargen zum Tragen der Tischplatte und vier Tischbeinen, die jeweils in den Eckbereichen der Tischplatte zwischen zwei angrenzenden Zargen angeordnet sind, die Zargen miteinander und die Tischbeine mit den Zargen verschweißt oder verschraubt. Bei einem sehr leichten Tischmöbel stellt sich hierbei das Problem der Formstabilität, falls zum Beispiel für die Zargen und die Tischbeine Hohlprofile aus Aluminium verwendet werden. Insbesondere beim Verschieben und Umlegen auf die Seite treten an den Tischbeinen hohe Verformungs- und Verwindungskräfte auf, die leicht zu einer Beschädigung des Tischmöbels führen können.

Der vorliegenden Erfindung liegt daher die Aufgabe zugrunde, eine Verbindungsvorrichtung zum Verbinden eines Tischbeins mit wenigstens einer Zarge vorzusehen, die das Bereitstellen eines sehr leichten, aber dennoch formstabilen Tischmöbels ermöglicht.

Diese Aufgabe wird durch eine Verbindungsvorrichtung mit den Merkmalen des Anspruchs 1 gelöst. Vorteilhafte Ausgestaltungen und Weiterbildungen der Erfindung sind Gegenstand der abhängigen Ansprüche.

Die erfindungsgemäße Verbindungsvorrichtung zum Verbinden eines Tischbeins mit wenigstens einer Zarge, wobei sowohl das Tischbein als auch die Zarge zumindest in dem an die Verbindungsvorrichtung angrenzenden Bereich als Hohlprofil ausgebildet sind, ist versehen mit einem Profilkörper; einem ersten Fortsatz, der mit dem Profilkörper verbunden ist, der koaxial zu einer Zarge ausgebildet ist, und dessen Außendurchmesser im Wesentlichen dem Innendurchmesser des Hohlprofils der Zarge entspricht; und einem zweiten Fortsatz, der mit dem Profilkörper verbunden ist, der koaxial zu einem Tischbein ausgebildet ist und dessen Außendurchmesser im Wesentlichen dem Innendurchmesser des Hohlprofils des Tischbeins entspricht. Der erste und der zweite Fortsatz können in das Hohlprofil der Zarge bzw. des Tischbeins eingesetzt und mittels Presspassung befestigt werden, sodass die Verbindungsvorrichtung im Bereich dieser Verbindung auftretenden Verformungs- oder Verwindungskräften, die insbesondere auf die Tischbeine wirken können, entgegenwirken kann. Hierdurch können alle betroffenen Komponenten des Tischmöbels aus leichteren Materialien gefertigt und/oder leichter konstruiert werden.

In einer Ausgestaltung der Erfindung ist der zweite Fortsatz für das Tischbein im Wesentlichen senkrecht zu dem ersten Fortsatz für die Zarge ausgebildet. Außerdem können der erste und der zweite Fortsatz integral mit dem Profilkörper ausgebildet sein.

In einer bevorzugten Ausführungsform der Erfindung weist die Verbindungsvorrichtung ferner einen dritten Fortsatz auf, der ebenfalls mit dem Profilkörper verbunden ist, der koaxial zu einer weiteren Zarge ausgebildet ist und dessen Außendurchmesser im Wesentlichen dem Innendurchmesser des Hohlprofils der weiteren Zarge entspricht. Durch diesen dritten Fortsatz können insgesamt zwei Zargen und das Tischbein über die Verbindungsvorrichtung miteinander verbunden werden.

In einer weiteren Ausgestaltung der Erfindung ist dieser dritte Fortsatz für die weitere Zarge im Wesentlichen senkrecht zu dem ersten Fortsatz für die Zarge und zu dem zweiten Fortsatz für das Tischbein ausgebildet. Vorzugsweise ist der dritte Fortsatz ein von dem Profilkörper separates Bauteil, das mit dem Profilkörper fest verbunden ist, um die Herstellung der Verbindungsvorrichtung und auch die Montage eines Tischmöbels zu vereinfachen.

Aufgrund der oben beschriebenen erfindungsgemäßen Konstruktion der Verbindungsvorrichtung kann die Verbindungsvorrichtung vorteilhafterweise im Wesentlichen aus einem leichten Material hoher Formstabilität wie beispielsweise Magnesium oder einer Magnesiumlegierung gebildet sein.

Zur weiteren Gewichtsreduzierung kann der zweite Fortsatz für das Tischbein als Hohlprofil ausgebildet sein.

In einer Ausführungsform der Erfindung entspricht die Länge des zweiten Fortsatzes für das Tischbein etwa 15% bis etwa 40%, bevorzugter etwa 20% bis etwa 30% der Länge eines Tischbeins, und die Längen des ersten Fortsatzes und des dritten Fortsatzes für die Zargen entsprechen etwa 10% bis etwa 40%, bevorzugter etwa 15% bis etwa 25% der Länge einer Zarge.

Vorzugsweise sind die distalen Enden des ersten, des zweiten und/oder des dritten Fortsatzes konisch verjüngend ausgebildet, um das Einsetzen der Fortsätze in die Hohlprofile der Tischbeine bzw. Zargen zu erleichtern.

Die oben beschriebene Verbindungsvorrichtung der Erfindung eignet sich vorteilhafterweise für ein leichtes, aber formstabiles Tischmöbel, mit einer Tischplatte; vier im rechten Winkel zueinander angeordneten Zargen zum Tragen der Tischplatte; vier Tischbeinen, die jeweils in den Eckbereichen der Tischplatte zwischen zwei angrenzenden Zargen angeordnet sind; und vier derartigen Verbindungsvorrichtungen, die jeweils ein Tischbein und zwei angrenzende Zargen miteinander verbinden.

In einer Ausgestaltung der Erfindung können wenigstens zwei der Tischbeine mit Rollen oder dergleichen versehen sein, um das Tischmöbel einfacher bewegen zu können.

In einer weiteren Ausgestaltung der Erfindung sind zwei benachbarte Tischbeine an einander abgewandten Seiten des Tischmöbels außerhalb der Tischplatte angeordnet. Auf diese Weise ist es möglich, mehrere Tischmöbel platzsparend stapeln zu können.

Obige sowie weitere Merkmale und Vorteile der Erfindung werden aus der nachfolgenden Beschreibung eines bevorzugten, aber nicht einschränkenden Ausführungsbeispiels unter Bezugnahme auf die beiliegenden Zeichnungen besser verständlich. Darin zeigen:
- Fig. 1: eine schematische Seitenansicht eines Tischmöbels gemäß der vorliegenden Erfindung;
- Fig. 2: eine Darstellung des in Fig. 1 dargestellten Tischmöbels von unten;
- Fig. 3: ein Stapel mehrerer Tischmöbel von Fig. 1 in Seitenansicht;
- Fig. 4: ein Verbund mehrerer Tischmöbel von Fig. 1 von unten;
- Fig. 5: eine schematische Darstellung einer Verbindungsvorrichtung gemäß einem bevorzugten Ausführungsbeispiel der vorliegenden Erfindung in Draufsicht;
- Fig. 6: eine schematische Seitenansicht der Verbindungsvorrichtung von Fig. 5 gemäß Ansicht VI in Fig. 5;
- Fig. 7: eine Schnittansicht des Fortsatzes 28 für das Tischbein gemäß Schnitt VII-VII in Fig. 6;
- Fig. 8: eine Schnittansicht des Profilkörpers 22 gemäß Schnitt Vlll-Vlll in Fig. 6; und
- Fig. 9: eine schematische Seitenansicht des Fortsatzes 26 der Verbindungsvorrichtung von Fig. 5 gemäß Ansicht IX in Fig. 5.

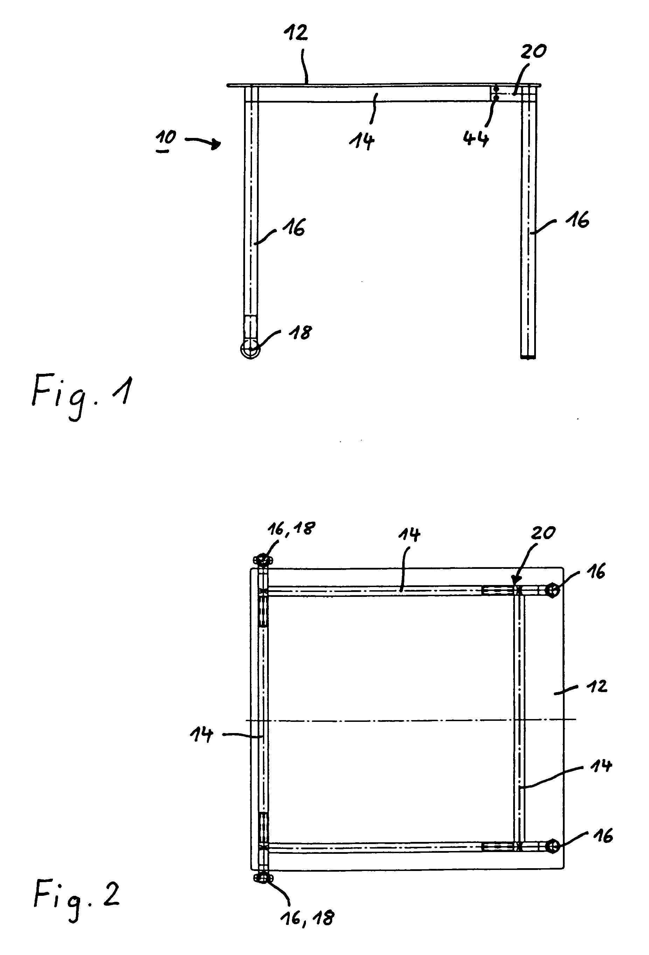

Unter Bezugnahme auf Fig. 1 bis 9 wird nun ein bevorzugtes Ausführungsbeispiel einer Verbindungsvorrichtung für ein Tischmöbel beschrieben, ohne dass die vorliegende Erfindung auf diese spezielle Ausführungsform beschränkt ist. Aufgrund der erfindungsgemäßen Verbindungsvorrichtung ist das Tischmöbel in Leichtbauweise und gleichzeitig mit einer hohen Formstabilität herstellbar und daher vorteilhafterweise insbesondere als Kinder- oder Schülertisch einsetzbar, ohne auf diese Anwendung beschränkt zu sein.

Wie in Fig. 1 und 2 zu erkennen, ist das Tischmöbel 10 aus einer Tischplatte 12 zum Beispiel aus Holz, vier im rechten Winkel zueinander angeordneten Zargen oder Streben 14 zum Tragen der Tischplatte 12, und vier Tischbeinen 16 in den Eckbereichen der Tischplatte 12 zwischen zwei angrenzenden Zargen 14 aufgebaut. Ein Tischbein 16 und zwei angrenzende Zargen 14 sind jeweils mittels einer Verbindungsvorrichtung 20 miteinander verbunden, die nachfolgend im Detail beschrieben wird. Die Tischplatte ist zum Beispiel auf die Zargen 14 aufgeklebt.

Während die Zargen 14 vorzugsweise einen rechteckigen Profilkörper besitzen, können die Tischbeine 16 einen rechteckigen oder auch einen runden Profilkörper haben. Um den Einsatz der erfindungsgemäßen Verbindungsvorrichtung 20 zu ermöglichen, sind die Zargen 14 und die Tischbeine 16 zumindest im Bereich angrenzend an die Verbindungsvorrichtung 20 als Hohlprofil ausgebildet. Zur weiteren Gewichtsreduzierung können die Zargen 14 und die Tischbeine 16 aber auch komplett als Hohlprofil ausgebildet sein.

In einer besonderen Ausführungsform der Erfindung sind zwei benachbarte Tischbeine 16 an einander abgewandten Seiten des Tischmöbels 10 außerhalb der Tischplatte 12 angeordnet, wie insbesondere in Fig. 2 zu erkennen. Zum leichteren Verschieben des Tischmöbels 10 können diese Tischbeine 16 vorzugsweise mit Rollen 18 oder dergleichen versehen sein.

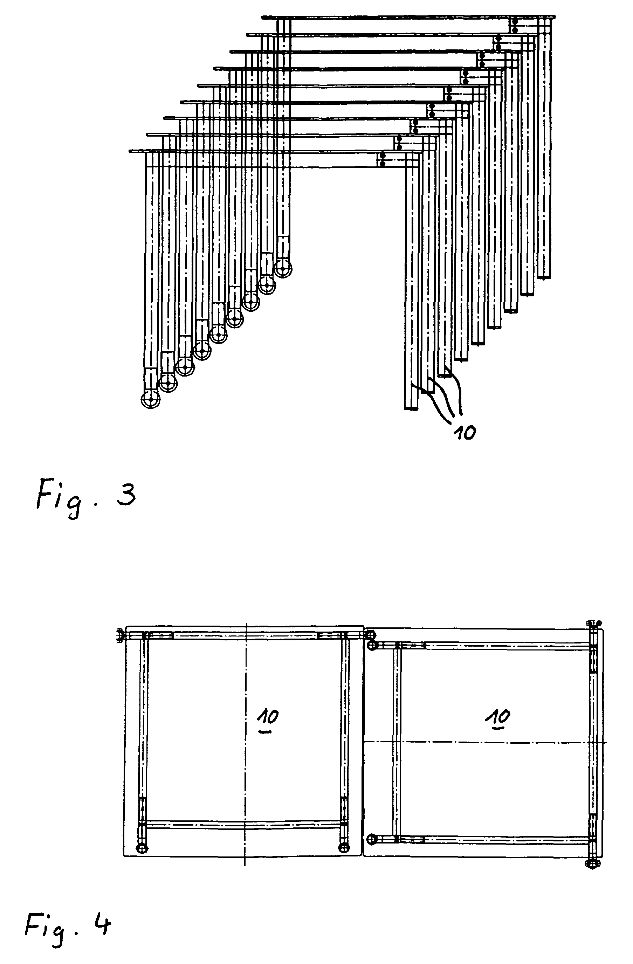

Aufgrund der in Fig. 2 veranschaulichten Anordnung der Tischbeine 16 unter der Tischplatte 12 ist es möglich, mehrere Tischmöbel 10 in sehr kompakter Weise übereinander zu stapeln, wie in der Seitenansicht von Fig. 3 dargestellt. Die außen liegenden Tischbeine 16 (links in Fig. 2) eines oberen Tischmöbels 10 greifen dabei neben die Tischplatte 12 eines unteren Tischmöbels 10, sodass die Tischmöbel 10 mit einem geringen seitlichen Versatz zueinander stapelbar sind.

Trotz der seitlich über die Tischplatte 12 vorstehenden Tischbeine 16 ist es möglich, einen geschlossenen Tischplattenverbund aus mehreren Tischmöbeln 10 aufzubauen, wie in Fig. 4 gezeigt, indem die jeweils benachbarten Tischmöbel zueinander um 90° verdreht aufgestellt werden, sodass die seitlich vorstehenden Tischbeine 16 des einen Tischmöbels 10 unter die Tischplatte 12 des anderen Tischmöbels 10 ragen.

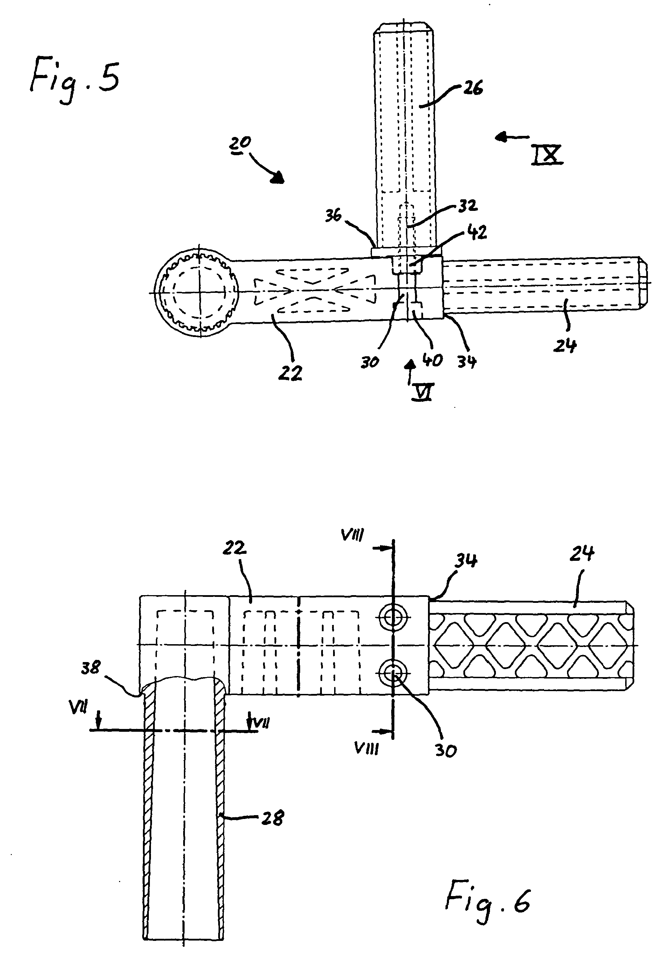

Es folgt nun eine detaillierte Beschreibung des Aufbaus einer Verbindungsvorrichtung gemäß einem bevorzugten Ausführungsbeispiel der vorliegenden Erfindung unter Bezugnahme auf Fig. 5 bis 9.

Eine Verbindungsvorrichtung 20 soll ein Tischbein 16 und zwei angrenzende Zargen 14 des Tischmöbels 10 miteinander verbinden. Um eine Leichtbauweise des Tischmöbels 10 zu ermöglichen, soll die Verbindungsvorrichtung 20 bei geringem eigenen Gewicht gleichzeitig eine Formstabilität des Tischmöbels 10 insbesondere in den Verbindungsbereichen gewährleisten.

Die Verbindungsvorrichtung 20 ist aus einem leichten Material mit einer hohen Formstabilität hergestellt. Ein geeignetes Material für die erfindungsgemäße Vorrichtung ist zum Beispiel Magnesium und dessen Legierungen.

Wie in der Draufsicht von Fig. 5 dargestellt, weist die Verbindungsvorrichtung 20 einen Profilkörper 22 auf, dessen Profil im Wesentlichen dem Profil der Zargen 14 des Tischmöbels 10 entspricht und dessen Hauptachse in der Ebene der angrenzenden Zargen 14 liegt. An diesen Profilkörper 22 schließen sich ein erster Fortsatz 24 zum Anschluss einer ersten Zarge 14, ein zweiter Fortsatz 28 zum Anschluss eines Tischbeins 16 und ein dritter Fortsatz 26 zum Anschluss einer zweiten Zarge 14 an, wie in Fig. 5 und 6 zu sehen ist. Der erste Fortsatz 24 für die erste Zarge 14 und der zweite Fortsatz 28 für das Tischbein 16 sind vorzugsweise integral mit dem Profilkörper 22 ausgebildet, während der dritte Fortsatz 26 für die zweite Zarge 14 vorzugsweise als separates Bauteil ausgebildet ist.

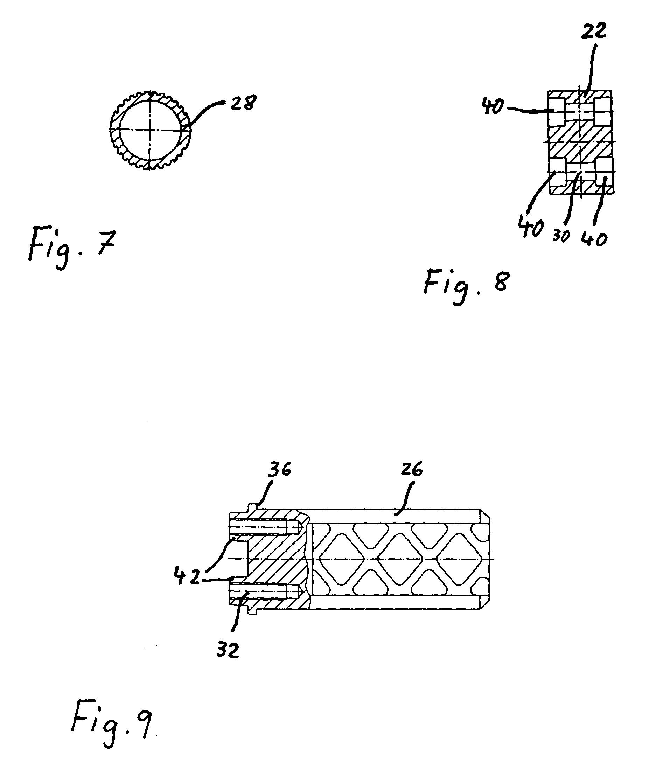

Der Fortsatz 28 für das Tischbein 16 ist koaxial zu dem Tischbein 16 angeordnet. Der Außendurchmesser des Fortsatzes 28 entspricht im Wesentlichen dem Innendurchmesser des Hohlprofils des Tischbeins 16, sodass der Fortsatz unter Presspassung fest in das Tischbein eingesetzt werden kann. Zur genauen Positionierung des Tischbeins 16 relativ zu der Verbindungsvorrichtung 20 weist der Profilkörper 22 am Ansatz des dritten Fortsatzes 28 ferner einen entsprechenden Anschlag 38 auf. Zur Reduzierung des Gesamtgewichts der Verbindungsvorrichtung 20 ist der dritte Fortsatz 28 für das Tischbein 16 bevorzugt als Hohlprofil ausgebildet, wie in Fig. 7 dargestellt.

Der zweite Fortsatz 28 erstreckt sich ein gewisses Maß in das Tischbein, sodass der gewünschte rechte Winkel zwischen dem Tischbein 16 und den Zargen 14 verstärkt wird. Hierdurch wird eine erhöhte Formstabilität des Tischmöbels 10 erreicht, sodass vorteilhafterweise sämtliche Komponenten des Tischmöbels 10 in Leichtbauweise ausgeführt werden können. Die Länge des zweiten Fortsatzes 28 für das Tischbein 16 entspricht dabei etwa 15% bis etwa 40%, bevorzugter etwa 20% bis etwa 30% der Länge eines Tischbeins 16.

Der integral mit dem Profilkörper 22 ausgebildete erste Fortsatz 24 zum Anschluss einer ersten Zarge 14 ist koaxial zu der Zarge 14 angeordnet. Der Außendurchmesser des Fortsatzes 24 entspricht im Wesentlichen dem Innendurchmesser des Hohlprofils der Zarge 14 und die Außenfläche des ersten Fortsatzes kann zusätzlich profiliert oder gerippt sein, wie in Fig. 6 angedeutet, sodass der Fortsatz unter Presspassung fest in die Zarge 14 eingesetzt werden kann. Zur genauen Positionierung der Zarge 14 relativ zur Verbindungsvorrichtung 20 weist der Profilkörper 22 am Ansatz des ersten Fortsatzes 24 ferner einen entsprechenden Anschlag 34 auf.

Der erste Fortsatz 24 erstreckt sich ebenfalls ein gewisses Maß in die Zarge 14, um die Stabilität der Verbindung zu erhöhen, sodass eine erhöhte Formstabilität des gesamten Tischmöbels 10 erreicht wird. Die Länge des ersten Fortsatzes 24 für die Zarge 14 entspricht dabei etwa 10% bis etwa 40%, bevorzugter etwa 15% bis etwa 25% der Länge einer Zarge 14.

Der dritte Fortsatz 26 zur Anbindung einer zweiten Zarge 14 ist koaxial zu dieser weiteren Zarge 14 ausgerichtet. Außerdem ist der dritte Fortsatz 26 im Wesentlichen senkrecht zu sowohl dem ersten Fortsatz 24 als auch dem zweiten Fortsatz 28 ausgebildet. Der Außendurchmesser des dritten Fortsatzes 26 entspricht im Wesentlichen dem Innendurchmesser des Hohlprofils der Zarge 14 und die Außenfläche des dritten Fortsatzes kann zusätzlich profiliert oder gerippt sein, wie in Fig. 9 angedeutet, sodass der Fortsatz unter Presspassung fest in die weitere Zarge 14 eingesetzt werden kann. Zur genauen Positionierung der weiteren Zarge 14 relativ zur Verbindungsvorrichtung 20 weist der dritte Fortsatz 26 einen umlaufenden Anschlag 36 auf.

Ferner erstreckt sich der dritte Fortsatz 26 analog dem ersten Fortsatz ein gewisses Maß in die weitere Zarge 14. Die Länge des dritten Fortsatzes 26 für die Zarge 14 entspricht dabei etwa 10% bis etwa 40%, bevorzugter etwa 15% bis etwa 25% der Länge einer Zarge 14.

Wie bereits oben erwähnt, ist der dritte Fortsatz 26 bevorzugt als separates Bauteil zu dem Profilkörper 22 ausgebildet und muss daher mit diesem fest verbunden werden. Wie im Schnitt VIII-VIII dargestellt, weist der Profilkörper 22 hierzu zwei Durchbohrungen 30 auf und der dritte Fortsatz 26 weist stirnseitig zwei Gewindebohrungen 32 auf, die fluchtend zueinander angeordnet werden und in welche zwei Schrauben 44 eingeschraubt werden.

Zur besseren Verdrehsicherung des dritten Fortsatzes 26 für die weitere Zarge 14 gegenüber dem Profilkörper 22 sind insgesamt zwei Schrauben 44 vorgesehen. Außerdem weist die Stirnseite des dritten Fortsatzes 26 im Bereich der Gewindebohrungen 32 jeweils einen Ansatz 42 auf, der in eine entsprechende Ausnehmung 40 in der Außenwand des Profilkörpers 22 aufgenommen wird. Die Schraubenköpfe werden ebenfalls in derartigen Ausnehmungen 40 des Profilkörpers 22 versenkt.

Um ein leichteres Einsetzen der Fortsätze 34, 26, 28 in die Zargen 14 bzw. Tischbeine 16 zu ermöglichen, sind deren distale Enden vorzugsweise konisch verjüngend ausgebildet.

### BEZUGSZIFFERNLISTE

- 10: Tisch
- 12: Tischplatte
- 14: Zarge
- 16: Tischbein
- 18: Rolle
- 20: Verbindungsvorrichtung
- 22: Profilkörper
- 24: Fortsatz für erste Zarge
- 26: Fortsatz für zweite Zarge
- 28: Fortsatz für Tischbein
- 30: Durchbohrungen in 22
- 32: Gewindebohrung in 26
- 34: Anschlag für erste Zarge
- 36: Anschlag für zweite Zarge
- 38: Anschlag für Tischbein
- 40: Ausnehmung
- 42: Ansatz
- 44: Schrauben

## Patentansprüche

1. Verbindungsvorrichtung (20) zum Verbinden eines Tischbeins (16) mit wenigstens einer Zarge (14), wobei sowohl das Tischbein als auch die Zarge zumindest in dem an die Verbindungsvorrichtung (20) angrenzenden Bereich als Hohlprofil ausgebildet sind, mit
einem Profilkörper (22);
einem ersten Fortsatz (24), der mit dem Profilkörper (22) verbunden ist, der koaxial zu einer Zarge (14) ausgebildet ist, und dessen Außendurchmesser im Wesentlichen dem Innendurchmesser des Hohlprofils der Zarge (14) entspricht; und
einem zweiten Fortsatz (28), der mit dem Profilkörper (22) verbunden ist, der koaxial zu einem Tischbein (16) ausgebildet ist, und dessen Außendurchmesser im Wesentlichen dem Innendurchmesser des Hohlprofils des Tischbeins entspricht.

2. Verbindungsvorrichtung nach Anspruch 1,
**dadurch gekennzeichnet,**
**dass** der zweite Fortsatz (28) im Wesentlichen senkrecht zu dem ersten Fortsatz (24) ausgebildet ist.

3. Verbindungsvorrichtung nach Anspruch 1 oder 2,
**dadurch gekennzeichnet,**
**dass** der erste Fortsatz (24) und der zweite Fortsatz (28) integral mit dem Profilkörper (22) ausgebildet sind.

4. Verbindungsvorrichtung nach einem der Ansprüche 1 bis 3,
**dadurch gekennzeichnet,**
**dass** die Verbindungsvorrichtung (20) ferner einen dritten Fortsatz (26) aufweist, der mit dem Profilkörper (22) verbunden ist, der koaxial zu einer weiteren Zarge (14) ausgebildet ist, und dessen Außendurchmesser im Wesentlichen dem Innendurchmesser des Hohlprofils der weiteren Zarge (14) entspricht.

5. Verbindungsvorrichtung nach Anspruch 4,
**dadurch gekennzeichnet,**
**dass** der dritte Fortsatz (26) im Wesentlichen senkrecht zu dem ersten Fortsatz (24) und zu dem zweiten Fortsatz (28) ausgebildet ist.

6. Verbindungsvorrichtung nach Anspruch 4 oder 5,
**dadurch gekennzeichnet,**
**dass** der dritte Fortsatz (26) ein von dem Profilkörper (22) separates Bauteil ist, das mit dem Profilkörper (22) fest verbunden ist.

7. Verbindungsvorrichtung nach einem der vorhergehenden Ansprüche,
**dadurch gekennzeichnet,**
**dass** die Verbindungsvorrichtung (20) aus einem leichten Material hoher Formstabilität besteht.

8. Verbindungsvorrichtung nach Anspruch 7,
**dadurch gekennzeichnet,**
**dass** die Verbindungsvorrichtung (20) im Wesentlichen aus Magnesium oder einer Magnesiumlegierung gemacht ist.

9. Verbindungsvorrichtung nach einem der vorhergehenden Ansprüche,
**dadurch gekennzeichnet,**
**dass** der zweite Fortsatz (28) als Hohlprofil ausgebildet ist.

10. Verbindungsvorrichtung nach einem der vorhergehenden Ansprüche,
**dadurch gekennzeichnet,**
**dass** die Länge des zweiten Fortsatzes (28) etwa 15% bis etwa 40%, bevorzugter etwa 20% bis etwa 30% der Länge eines Tischbeins (16) entspricht.

11. Verbindungsvorrichtung nach einem der vorhergehenden Ansprüche,
**dadurch gekennzeichnet,**
**dass** die Länge des ersten Fortsatzes (24) etwa 10% bis etwa 40%, bevorzugter etwa 15 % bis etwa 25 % der Länge einer Zarge (14) entspricht.

12. Verbindungsvorrichtung nach einem der Ansprüche 4 bis 11,
**dadurch gekennzeichnet,**
**dass** die Länge des dritten Fortsatzes (26) etwa 10% bis etwa 40%, bevorzugter etwa 15 % bis etwa 25 % der Länge einer Zarge (14) entspricht.

13. Verbindungsvorrichtung nach einem der vorhergehenden Ansprüche,
**dadurch gekennzeichnet,**
**dass** die distalen Enden des ersten, des zweiten und/oder des dritten Fortsatzes (24, 26, 28) konisch verjüngend ausgebildet sind.

14. Tischmöbel (10), mit
einer Tischplatte (12);
vier im rechten Winkel zueinander angeordneten Zargen (14) zum Tragen der Tischplatte (12);
vier Tischbeinen (16), die jeweils in den Eckbereichen der Tischplatte (12) zwischen zwei angrenzenden Zargen (14) angeordnet sind; und
vier Verbindungsvorrichtungen (20) nach einem der Ansprüche 1 bis 13, die jeweils ein Tischbein (16) und zwei angrenzende Zargen (14) miteinander verbinden.

15. Tischmöbel nach Anspruch 14,
**dadurch gekennzeichnet,**
**dass** wenigstens zwei der Tischbeine (16) mit Rollen (18) versehen sind.

16. Tischmöbel nach Anspruch 14 oder 15,
**dadurch gekennzeichnet,**
**dass** zwei benachbarte Tischbeine (16) an einander abgewandten Seiten des Tischmöbels (10) außerhalb der Tischplatte (12) angeordnet sind.
